# EUROPÄISCHE PATENTSCHRIFT

(11) **EP 4 401 916 B1**
(45) Veröffentlichungstag und Bekanntmachung des Hinweises auf die Patenterteilung: **08.10.2025**
(21) Anmeldenummer: 23704721.2
(22) Anmeldetag: 07.02.2023
(51) Int. Cl.: B23K 26/242, B23K 26/26, B23K 26/32, B23K 26/323, B23K 26/38, B23K 26/40, B23K 37/04, B23K 37/047, B23K 101/18, B23K 103/18

(54) **VERFAHREN UND VORRICHTUNG ZUM FÜGEN UND UMFORMEN VON FLACHMATERIALIEN**
METHOD AND DEVICE FOR JOINING AND SHAPING SHEET MATERIALS
PROCÉDÉ ET DISPOSITIF D'ASSEMBLAGE ET DE FORMAGE DE MATÉRIAUX PLATS

(30) Priorität: 24.02.2022 DE 102022104502; 01.04.2022 DE 102022107873
(43) Veröffentlichungstag der Anmeldung: 24.07.2024
(73) Patentinhaber: Baosteel Lasertechnik GmbH, 88212 Ravensburg (DE)
(72) Erfinder: ALBER, Gerhard, 88276 Berg (DE); MUFFLER, Thomas, 88356 Ostrach (DE)
(74) Vertreter: RavensPAT Patentanwälte Partnerschaft mbB
(86) Internationale Anmeldenummer: PCT/EP2023/052897
(87) Internationale Veröffentlichungsnummer: WO 2023/161004

(56) Entgegenhaltungen:
- WO-A1-2010/134253
- CN-U- 204 818 435
- DE-A1- 19 852 462
- US-A1- 2004 202 531
- US-A1- 2014 374 390

## Beschreibung

Die vorliegende Erfindung betrifft ein Verfahren zum Fügen und Umformen von Flachmaterialien sowie eine Vorrichtung zur Durchführung des Verfahrens entsprechend dem Oberbegriff der Ansprüche 1 und 10 (siehe z.B. CN 204 818 435 U).

Das Verfahren dient zur Herstellung von Profilelementen, welche aus unterschiedlichen Flachmaterialien mit vorzugsweise unterschiedlichen physikalischen und technischen Eigenschaften versehen sind, zusammengesetzt sind und nach dem Fügen bzw. Schweißen der Flachmaterialien einem Umformprozess zugeführt werden.

Im Sinne der Erfindung ist unter einem Profilelement vorzugsweise ein strangförmiger Körper zu verstehen, welcher in seiner Längsrichtung zumindest anteilig eine an seinem Umfang geöffnete Kontur aufweist.

Besonders vorteilhaft ist dabei die Ausführungsform, in welcher die Flachmaterialien in Bereitstellungsvorrichtungen, insbesondere einer Art von Bereitstellungsschubladen, bevorratet werden, und diese Bereitstellungsvorrichtungen gleichzeitig die Funktion eines Flachmaterialspeichers erfüllen. Diese aus dem Stand der Technik bislang unbekannte Nutzung, in welcher Flachmaterialien aus der Bereitstellungsvorrichtung entnommen, nur teilweise abgeschnitten, und die Reststücke für einen späteren erneuten Entnahmeschritt wieder in die Bereitstellungsvorrichtung zurückgeführt werden, erlaubt einen kontinuierlichen Flachmaterialmix aus unterschiedlichen Ausgangsmaterialien, welche in frei wählbarer Reihenfolge in schrittweiser Entnahme und Fügung zu einem hybriden Bauteil zusammengebracht werden.

Besondere Ausführungsformen von Bauteilen aus unterschiedlichen Flachmaterialien, wie **z.B.** Profile mit am Umfang variierenden technischen und physikalischen Eigenschaften der Flachmaterialien, sind dadurch besonders effizient herstellbar.

Technische Aufgabe der vorliegenden Erfindung ist die Energie-, und Emissionsreduktion, insbesondere durch effiziente Herstellung, sowie die Ressourceneinsparung bei Konstruktionsprofilen sowohl bei ihrer Herstellung, als auch bei ihrem Einsatz, sowie insgesamt die Vereinfachung der Herstellung derartiger Bauteile.

Die technische Aufgabe wird durch einen Gegenstand bzw. ein Verfahren mit den technischen Merkmalen nach den unabhängigen Ansprüchen 1 und 10 gelöst. Vorteilhafte Ausführungsformen sind Gegenstand der abhängigen Ansprüche, der Beschreibung und der Zeichnungen.

Im Sinne der Erfindung ist unter einem Verbundwerkstück ein Werkstück zu verstehen, das aus wenigstens einem an ein zweites Flachmaterial gefügtes, erstes Flachmaterial zusammengesetzt ist. Weiterhin ist im Sinne der Erfindung unter der Anzahl X eine beliebige Anzahl zu verstehen.

Weiterhin ist im Sinne der Erfindung unter einer ersten Spanneinrichtung eine eingangsseitige Spanneinrichtung zu verstehen und unter einer zweiten Spanneinrichtung eine ausgangsseitige Spanneinrichtung. Eingangsseitig und ausgangsseitig ist dahingehend zu verstehen, als dass eingangsseitig Flachmaterialien zugeführt werden und ausgangsseitig die verarbeiteten Flachmaterialien abgeführt werden.

Gemäß einem Aspekt wird die technische Aufgabe der Erfindung durch ein Verfahren zum Fügen und Umformen von Flachmaterialien gelöst, wobei wenigstens ein erstes Flachmaterial und wenigstens ein zweites Flachmaterial in je einer und dem jeweiligen Flachmaterial zugeordneten Bereitstellungsvorrichtungen einer Schneid-Schweißvorrichtung zugeführt werden, umfassend die Verfahrensschritte:
a) Bereitstellen des ersten Flachmaterials aus einer ersten Bereitstellungsvorrichtung;
b) Auflegen und Spannen des ersten Flachmaterials an einer eingangsseitigen Spannvorrichtung;
c) Ausrichten des ersten Flachmaterials an einer Fügekante eines Ausgangswerkstück, wobei das Ausgangswerkstück an einer ausgangsseitigen Spannvorrichtung gespannt ist;
d) Verbinden des ersten Flachmaterials mit dem Ausgangswerkstück an der Fügekante mittels eines Schweißvorgangs zu einem Verbundwerkstück;
e) Transport des Verbundwerkstücks in Richtung eines Ausgabetisches um eine erste Transportschrittstrecke;
f) Abtrennen eines Reststücks des ersten Flachmaterials von dem Verbundwerkstück an einer Trennkante;
g) Entfernen, insbesondere Zurückziehen, des Reststücks des ersten Flachmaterials von der eingangsseitigen Spannvorrichtung;
h) Bereitstellen eines zweiten Flachmaterials aus einer zweiten Bereitstellungsvorrichtung;
i) Auflegen und Spannen der zweiten Flachmaterials an einer eingangsseitigen Spannvorrichtung;
j) Ausrichten des zweiten Flachmaterials an der Trennkante an dem Verbundwerkstück, wobei das Verbundwerkstück an einer ausgangsseitigen Spannvorrichtung gespannt ist;
k) Verbinden des zweiten Flachmaterials mit dem Verbundwerkstück an der Trennkante mittels eines Schweißvorgangs;
m) Wiederholtes Zuführen des ersten Flachmaterials oder des zweiten Flachmaterials oder weiterer Flachmaterialien aus jeweiligen Bereitstellungsvorrichtungen.

Dadurch wird beispielsweise der technische Vorteil erreicht, dass sich durch die Verwendung verschiedener Flachmaterialien ein maßgeschneidertes Verbundwerkstück herstellen lässt, das individuelle Anforderungen an Gewicht oder Steifigkeit aufweist. In nur einem Ablaufzyklus kann dieses mit mehreren Schweißnähten hergestellt werden. Dies ermöglicht beispielsweise logistische Vorteile, da die sonst notwendigen weiteren Ablaufzyklen einer konventionellen Schweißmaschine entfallen können. Weiterhin können auch sehr schmale Flachmaterialbreiten von etwa 10 mm zu einem Verbundwerkstück verarbeitet werden, wodurch eine vollständig optimierte Herstellung des Verbundwerkstücks hinsichtlich Kosten-, Funktions- und Gewichtsoptimierung ermöglicht wird. Weiterhin ergeben sich Vorteile im Hinblick auf den Umweltschutz, da nicht nur bei der Herstellung der Verbundwerkstücke Energie und somit Emissionen eingespart werden können, sondern auch da die Verbundwerkstücke gezielt zur Energie- und Gewichtseinsparung konfiguriert und eingesetzt werden können. Weiterhin kann vorteilhaft die Erzeugung von unnötigem Schrott bei der Herstellung vermieden werden, da Verfahrensschritte zur Entfernung von Materialsegmenten zur Gewichtsreduktion entfallen können.

Weiterhin wird dadurch beispielsweise der technische Vorteil erreicht, dass eines der Flachmaterialien im weiteren Verlauf des Verfahrens diesem zügig bereitgestellt und dabei verwendet werden kann.

In einer weiteren technisch vorteilhaften Ausführungsform des Verfahrens ist ein dem Verfahrensschritt a) vorausgehender Verfahrensschritt a1) vorgesehen:
a1) Durchführen eines Initialschnitts zur Kantenvorbereitung, wobei das erste Eingangsmaterial besäumt und ein erster Streifen des Eingangsmaterials als Abfall abgetrennt wird.

Dadurch wird beispielsweise der technische Vorteil erreicht, dass eine mit einer bedarfsgerechten Formgebung versehene und definierte Kante erzeugt werden kann.

In einer weiteren technisch vorteilhaften Ausführungsform des Verfahrens ist einen an den Verfahrensschritt b) oder i) anschließenden Verfahrensschritt bi) vorgesehen:
bi) Vorbereiten, insbesondere Besäumen einer Kante, wobei das Vorbereiten bevorzugt im gespannten Zustand erfolgt.

Dadurch wird beispielsweise der technische Vorteil erreicht, dass das Flachmaterial präzise besäumt werden kann und das Risiko eines Verzuges oder eines Verrutschens minimiert wird, um notwendige Toleranzen ermöglichen zu können.

In einer weiteren technisch vorteilhaften Ausführungsform des Verfahrens ist vorgesehen, dass Verfahrensschritt e) mittels der folgenden Verfahrensschritte erfolgt:
e1) Lösen der eingangsseitigen Spannvorrichtung;
e2) Versetzen des an der ausgangsseitigen Spannvorrichtung gespannten Verbundwerkstücks mittels der ausgangsseitigen Spannvorrichtung um die erste Transportschrittstrecke;
e3) Spannen der eingangsseitigen Spannvorrichtung;
e4) Lösen der ausgangsseitigen Spannvorrichtung;
e5) Rückversetzen der ausgangsseitigen Spannvorrichtung
e6) Spannen des Verbundwerkstücks mittels der ausgangsseitigen Spannvorrichtung.

Dadurch wird beispielsweise der technische Vorteil erreicht, dass ein Vortrieb des Verbundwerkstücks ermöglicht wird, der ein mögliches Verrutschen minimiert, im Optimalfall vermieden wird, und dadurch die Präzision und Genauigkeit des Fügens der Flachmaterialien aneinander erhöht werden kann. Beispielsweise können die auf Grund des Schweißens auftretenden Verzugskräfte dadurch minimiert werden, dass das Verbundwerkstück sich stets in einem gespannten Zustand befinden kann.

In einer weiteren technisch vorteilhaften Ausführungsform des Verfahrens ist vorgesehen, dass das Verbundstück mittels der ausgangsseitigen Spannvorrichtung insbesondere am Ort der zuletzt ausgeführten Naht bzw. Fügekante gespannt wird. Dadurch wird beispielsweise der technische Vorteil erreicht, dass die speziell im Bereich der zu schweißenden Fügekante auftretenden Spannungen und Verzugskräfte einen verringerten Einfluss auf die Ausrichtung und damit die Güte eines nachfolgenden Schweißvorgangs haben.

In einer weiteren technisch vorteilhaften Ausführungsform des Verfahrens ist ein an den Verfahrensschritt k) anschließender Verfahrensschritt l) vorgesehen:
l) Wiederholen der vorausgegangenen Verfahrensschritte mit einer Anzahl X verschiedener Flachmaterialen.

Dadurch wird beispielsweise der technische Vorteil erreicht, dass wenigstens in einer Dimension beliebige Abmessungen des Verbundwerkstücks ermöglicht werden und das Verbundwerkstück somit maßgeschneidert hergestellt werden kann.

In einer weiteren technisch vorteilhaften Ausführungsform des Verfahrens ist ein an den Verfahrensschritt g) anschließender Verfahrensschritt g1) vorgesehen:
g1) Lagerung des ersten Flachmaterials in einer ersten Bereitstellungsvorrichtung.

Dadurch wird beispielsweise der technische Vorteil erreicht, dass das erste Flachmaterial im späteren Verfahrensverlauf erneut verwendet werden kann und zügig zur Verfügung steht. Auch die weiteren Flachmaterialien können so zur Verfügung gestellt werden, was eine platzsparende und zügige Herstellung ermöglichen kann. Überdies ist die Schneidkante des vorangegangenen Schneidvorgangs bereits in der Güte einer besäumten Kante gegeben, so dass ein weiterer Besäumschnitt und der damit einhergehende Materialverlust vermieden wird.

In einer weiteren technisch vorteilhaften Ausführungsform des Verfahrens ist vorgesehen, dass das Abtrennen des Verfahrensschritt f) geradlinig oder einem Konturverlauf folgend erfolgt, wobei insbesondere das Abtrennen des Verfahrensschritts f) in einem Winkel zur Flächennormalen des Flachmaterials erfolgt.

Dadurch wird beispielsweise der technische Vorteil erreicht, dass die zu schweißende Kante beliebig und individuell geformt werden kann und darüber hinaus das Nutzen von Vorteilen, beispielsweise denen eines Schweißvorgangs mittels V-Schnitt, ermöglicht werden können.

In einer weiteren technisch vorteilhaften Ausführungsform des Verfahrens ist vorgesehen, dass ein abschließender Verfahrensschritt einen Umformprozess der gefügten Flachmaterialien umfasst.

Dadurch wird beispielsweise der technische Vorteil erreicht, dass das aus den gefügten Flachmaterialien zunächst planare Verbundwerkstück zu einem dreidimensionalen Werkstück umgeformt werden kann, welches zusätzliche Eigenschaften und weitere Anwendungsmöglichkeiten bieten. Beispielsweise kann ein zu einem Träger umgeformtes Verbundwerkstück zur Gewichtreduktion bei gleichbleibender Stabilität im Fahrzeugbau eingesetzt werden und so zu Energieeinsparungen und Emissionsreduktion genutzt werden.

Eine weitere Ausführungsform des Verfahrens unter Heranziehung eines Umformprozesses sieht vor, dass der Umformprozess ein Abkanten mit einem Abkantwinkel, insbesondere zwischen 45° und 135°, bevorzugt in etwa 90° umfasst, wobei mittels des Verfahrens insbesondere ein in seine Längsrichtung geöffneter Profilkörper gebildet wird.

Durch die Anwendung des Umformvorgangs als Abkanten kann vereinfacht ein gewinkelter, insbesondere V-förmig oder U-förmig offener Profilkörper hergestellt werden, welcher die Vorteile der technischen Eigenschaften des Verbundwerkstückes aus unterschiedlichen gefügten Flachmaterialien kombiniert

Gemäß einem weiteren Aspekt wird die technische Aufgabe der Erfindung durch eine Vorrichtung zur Durchführung des Verfahrens zum Fügen und Umformen von Flachmaterialien gelöst, umfassend wenigstens zweier Bereitstellungsvorrichtungen, wenigstens einer ersten und wenigstens einer zweiten Spanneinrichtung, wenigstens einer Schneid-Schweißeinrichtung sowie wenigstens eines Ausgabetisches, wobei die Bereitstellungsvorrichtungen relativ zum Ausgabetisch oder relativ zu der zweiten Spanneinrichtung bewegbar ausgebildet sind.

Dadurch wird beispielsweise der technische Vorteil erreicht, dass die Flachmaterialien zügig und beliebig dem Verfahren zugeführt werden können und somit Zeitvorteile und Kostenvorteile erzeugt werden können. Beispielsweise wird an der Vorrichtung selbst kein zusätzlicher Raum zur Lagerung der Flachmaterialien benötigt und der gesamte Herstellungsprozess kann beispielsweise in nur einer einzigen Produktionslinie durchgeführt werden.

Entsprechend der Erfindung ist es für die Vorrichtung vorgesehen, dass die Bereitstellungsvorrichtungen flächig, insbesondere schubladenförmig und mit einem an das jeweilige Flachmaterial angepassten Vorschub zum Verschieben oder Zurückziehen der Flachmaterialen ausgebildet sind.

Insbesondere weist der Vorschub frei programmierbare Achsen auf.

Dadurch wird beispielsweise der technische Vorteil erreicht, dass die einzelnen Flachmaterialien in einer in der Fläche beliebigen Orientierung für den Fügeprozess aneinander angelegt werden können, oder sich deren Orientierung entsprechend beliebig ändern lässt und sich somit weitere Möglichkeiten zur maßgeschneiderten Herstellung ergeben.

In einer weiteren technisch vorteilhaften Ausführungsform der Vorrichtung ist vorgesehen, dass jede Bereitstellungsvorrichtung eine ihr jeweils zugeordnete erste Spanneinrichtung umfasst und die zweite Spanneinrichtung dem Ausgabetisch zugeordnet ist. Dadurch wird beispielsweise der technische Vorteil erreicht, dass der von der Vorrichtung benötigte Raum minimiert wird und ein kompakter und platzsparender Herstellungsprozess ermöglicht wird.

In einer weiteren technisch vorteilhaften Ausführungsform der Vorrichtung ist vorgesehen, dass die Bereitstellungsvorrichtungen vertikal zueinander angeordnet sind. Dadurch wird beispielsweise der technische Vorteil erreicht, dass ein in der Fläche von der Vorrichtung benötigter Raum minimiert wird und ein kompakter und platzsparender Herstellungsprozess ermöglicht wird.

In einer weiteren technisch vorteilhaften Ausführungsform der Vorrichtung ist vorgesehen, dass die Spanneinrichtungen Magnetspanntechnik, oder Vakuumspanntechnik, oder Spannbrückentechnik umfassen, wobei insbesondere die Spanneinrichtungen für ein einseitiges oder für ein beidseitiges Spannen der Flachmaterialien ausgebildet sind.

Dadurch wird beispielsweise der technische Vorteil erreicht, dass beliebige Flachmaterialien mit ebenso beliebiger Beschichtung verarbeitet werden können und das Spannen dieser Flachmaterialien optimiert werden kann.

In einer weiteren technisch vorteilhaften Ausführungsform der Vorrichtung ist vorgesehen, dass eine jede Bereitstellungsvorrichtung Klemmvorrichtungen, insbesondere Manipulatoren zum Ausrichten oder Arretieren der Flachmaterialien aufweist, wobei die Klemmvorrichtungen insbesondere frei programmierbare Bewegungsachsen aufweisen.

Dadurch wird beispielsweise der technische Vorteil erreicht, dass die Flachmaterialien dreidimensional im Raum bewegt werden können und aneinander gefügt werden können, was die Flexibilität der maßgeschneiderten Herstellung weiter verbessert.

In einer weiteren technisch vorteilhaften Ausführungsform der Vorrichtung ist vorgesehen, dass die Schneid-Schweißeinrichtung wenigstens einen Laserkopf umfasst, wobei der wenigstens eine Laserkopf zum Schweißen der Flachmaterialien, und/oder zum Schneiden der Flachmaterialien, und/oder zur Schweißnahtvorbereitung, insbesondere zur Ausführung eines Ablationsschritts an der Kante der Flachmaterialien ausgebildet ist.

Dadurch wird beispielsweise der technische Vorteil erreicht, dass zusätzliche Vorrichtungen zum lasergestützten Bearbeiten der Flachmaterialien an der Vorrichtung vermieden werden können und dadurch die Herstellung platzsparend und kompakt ermöglicht wird. Darüber hinaus wird hierdurch eine Zeit- und Energieeinsparung bei der Produktion ermöglicht, da auf weitere Laser- oder Schneid-Einrichtungen verzichtet werden kann.

In einer weiteren technisch vorteilhaften Ausführungsform der Vorrichtung ist vorgesehen, dass die Schneid-Schweißeinrichtung als Laserportal, insbesondere als 2D-Laserportal ausgebildet ist. Dadurch wird beispielsweise der technische Vorteil erreicht, dass in nur einer Produktionslinie eine verbesserte Taktzeit bei der Herstellung ermöglicht werden kann.

In einer weiteren technisch vorteilhaften Ausführungsform der Vorrichtung ist vorgesehen, dass der Laserkopf als Remote-Laserkopf oder als Nahfeld-Laserkopf ausgebildet ist. Dadurch wird beispielsweise der technische Vorteil erreicht, dass die Flexibilität im Herstellungsprozess erhöht werden kann und komplexere Strukturen bearbeitet und hergestellt werden können.

In einer weiteren technisch vorteilhaften Ausführungsform der Vorrichtung ist vorgesehen, dass die Vorrichtung einen Förderer zur Entfernung von Abfall aus der Vorrichtung umfasst, wobei der Förderer insbesondere einen Auffangtrichter umfasst und bevorzugt eine Absaugung umfasst. Dadurch wird beispielsweise der technische Vorteil erreicht, dass die Vorrichtung zusätzlich kompakt und platzsparend eingesetzt werden kann und abgetrennte Reste den Ablauf der Herstellung nicht behindern.

In einer weiteren technisch vorteilhaften Ausführungsform der Vorrichtung ist vorgesehen, dass die Vorrichtung eine Übergabevorrichtung zwischen dem Ausgabetisch und einer Umformungsvorrichtung umfasst. Dadurch wird beispielsweise der technische Vorteil erreicht, dass ein zügiger Transport zwischen diesen beiden Positionen ermöglicht wird, was sich positiv auf die Herstellungsdauer auswirken kann.

In einer weiteren technisch vorteilhaften Ausführungsform der Vorrichtung ist vorgesehen, dass die Flachmaterialien aus einem Vormaterialspeicher, insbesondere mittels Flachmaterial-Coils oder mittels Flachmaterial-Tafeln bereitgestellt sind. Dadurch wird beispielsweise der technische Vorteil erreicht, dass die Vorrichtung dauerhaft betrieben werden kann und Ausfallzeiten beispielsweise zum Nachbestücken vermieden werden können indem der Vormaterialspeicher unabhängig bestückt werden kann.

Ausführungsbeispiele der Erfindung sind in den Zeichnungen dargestellt und werden im Folgenden näher beschreiben. Es zeigen:
- Fig 1:: eine schematische Übersichtsdarstellung einer Vorrichtung zur Veranschaulichung eines Verfahrens;
- Fig 2:: eine Kantenvorbereitung mittels eines Besäumschnitts;
- Fig 3:: einen Trennschnitt zur Abtrennung eines ersten Streifens 4a von einem Flachmaterial 4;
- Fig 4:: ein Fügen und Schweißen eines ersten Flachmaterials 4 mit einem zweiten Flachmaterial 5;
- Fig 5:: ein Lösen einer eingangsseitigen Spannvorrichtung 7 und ein Vorschub 50 einer ausgangsseitigen Spannvorrichtung 8 zum Transport eines Verbundwerkstücks 20;
- Fig 6:: ein Trennschnitt zur Abtrennung eines Streifens 5a vom einem zweiten Flachmaterial 5 nach Rückstellung der ausgangsseitigen Spannvorrichtung 8;
- Fig 7:: Wiederholen der Schritte zur Anbringung eines Streifens des dritten Flachmaterials 6 und Wiederholen mit beliebigen Kombinationen von den Flachmaterialien 4, 5, 6 zur Bildung eines Verbundwerkstücks 20; sowie
- Fig 8:: exemplarisches Verbundwerkstück 20 als Kombination von Streifen von Flachmaterialien 4, 5, 6.

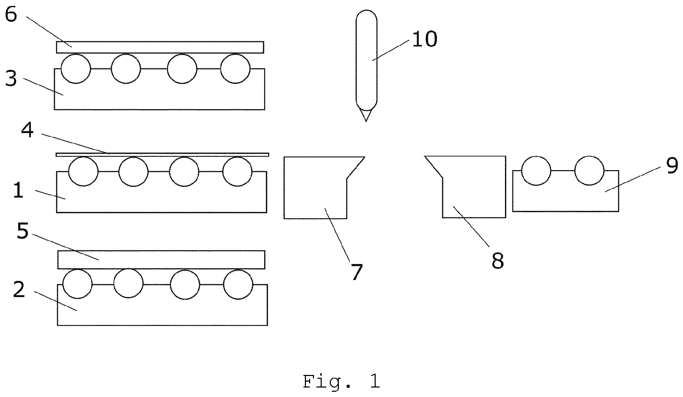

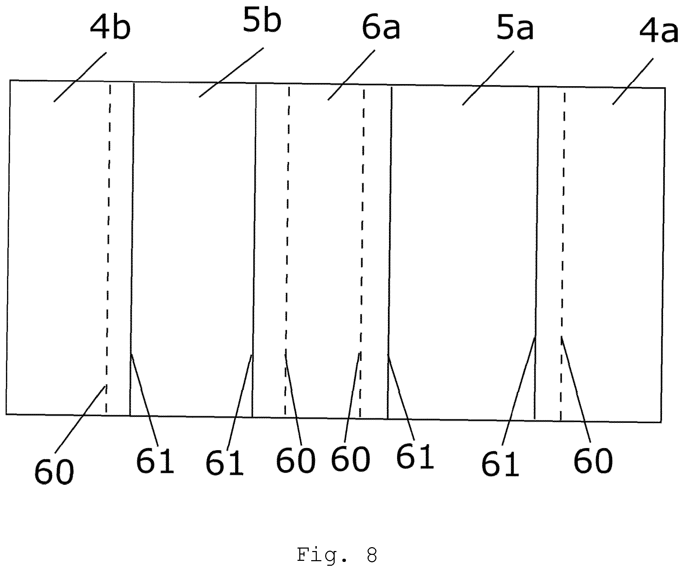

Eine Zusammenschau der Figuren 1 bis 7 zeigt eine exemplarische Ausführungsform des Verfahrens und eine schematische Darstellung der Vorrichtung bis zur Herstellung des in Figur 8 gezeigten Verbundwerkstücks.

Die Bereitstellungsvorrichtungen 1, 2, 3 stellen ein ihnen jeweils zugeordnetes und auf ihnen liegendes Flachmaterial 4, 5, 6 bereit, welches an einer eingangsseitigen Spannvorrichtung 7, sowie einer ausgangsseitigen Spannvorrichtung 8 gespannt werden kann, während es mit einer als Laserkopf 10 ausgebildeten Schneid-Schweißvorrichtung bearbeitet wird, um in Richtung des Ausgabetisches 9 transportiert zu werden. Dargestellt ist dies in Figur 1 mit sich beispielhaft in ihrer Dicke unterscheidenden Flachmaterialien 4, 5, 6. Beispielsweise können vorteilhaft Flachmaterialien mit ganz unterschiedlichen geometrischen oder physikalischen Eigenschaften Verwendung finden.

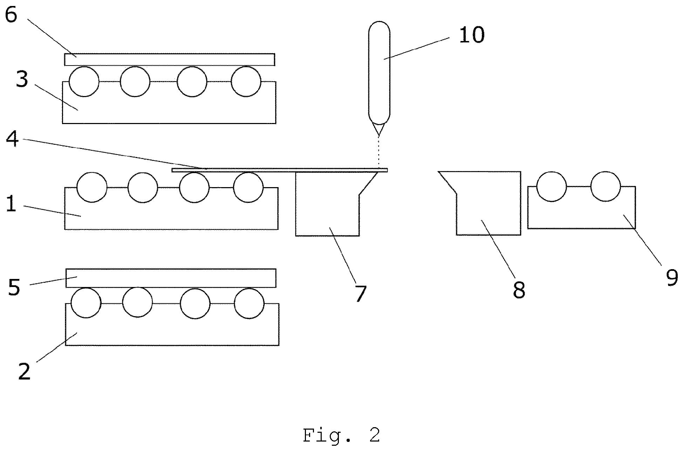

Die Figur 2 zeigt dass das erste Flachmaterial 4 mittels der Bereitstellungsvorrichtung 1 in Richtung der eingangsseitigen Spannvorrichtung 7 und teilweise darüber hinaus in Richtung ausgangsseitiger Spanneinrichtung 8 verschoben wurde und sodann zur Kantenvorbereitung einen Besäumschnitt durch den Laserkopf 10 erfährt. Der hierdurch abgetrennte und nicht näher bezeichnete Streifen des Flachmaterials 4 kann sodann als Abfall aus der Vorrichtung entfernt werden, was nicht näher dargestellt ist.

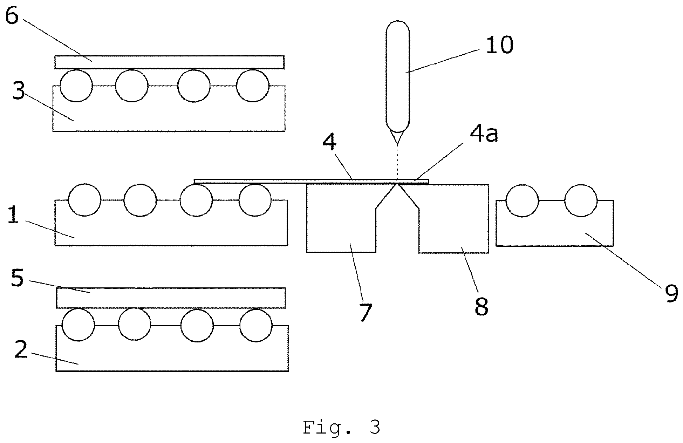

In Folge des Besäumschnitts wird wie in Figur 3 dargestellt das erste Flachmaterial 4 erneut über die Spannvorrichtung 7 hinaus bewegt und die ausgangsseitige Spannvorrichtung 8 spannt das erste Flachmaterial 4 nunmehr zusätzlich. Hierdurch kann vorteilhaft ermöglicht werden, dass der nun mittels des Lasers 10 durchgeführte Trennschnitt zur Erzeugung eines ersten Streifens ersten Flachmaterials 4a präzise und ohne Verzug des ersten Flachmaterials 4 durchgeführt werden kann.

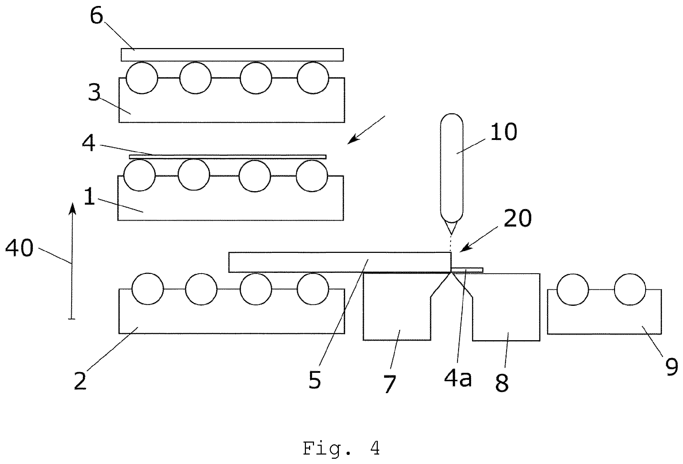

Ist der erste Streifen 4a abgetrennt, wird, wie in Figur 4 dargestellt, das nunmehr gekürzte erste Flachmaterial 4c wieder zurückgezogen und für eine mögliche spätere Verwendung binnen der Bereitstellungsvorrichtung gespeichert. Der erste Streifen ersten Flachmaterials 4a verbleibt als Ausgangswerkstück an der ausgangsseitigen Spanneinrichtung gespannt. Die Bereitstellungseinrichtungen erfahren sodann einen horizontalen Versatz 40, um ein zweites Flachmaterial 5 zur Verfügung zu stellen. Auch dieses Flachmaterial 5 wird bei seiner erstmaligen Verwendung zunächst besäumt. Dies wird, wie auch das erste Flachmaterial **4,** in Richtung der ausgangsseitigen und über die eingangsseitige Spannvorrichtung hinweg verschoben und an den sich noch in der ausgangsseitigen Spanneinrichtung 8 gespannten Streifen ersten Flachmaterials 4a angelegt. Beim Anlegen des Flachmaterials 5 an das Flachmaterial 4a erfolgt keine Besäumung mehr.

Mittels eines durch den Laser nun durchgeführten Schweißvorgangs wird das zweite Flachmaterial 5 an den Streifen ersten Flachmaterials 4a zu einem Verbundwerkstück 20 gefügt, während beide Flachmaterialien je stets fest an den Spanneinrichtungen 7, 8 gespannt sind. Vorteilhaft kann so die Güte der Schweißvorgänge optimiert werden, wenn zu jedem Zeitpunkt nach dem Abtrennen wenigstens der erste Streifen ersten Flachmaterials 4a, respektive das Verbundwerkstück 20 wenigstens teilweise fest gespannt ist, bis das Verbundwerkstück 20 vollends hergestellt ist.

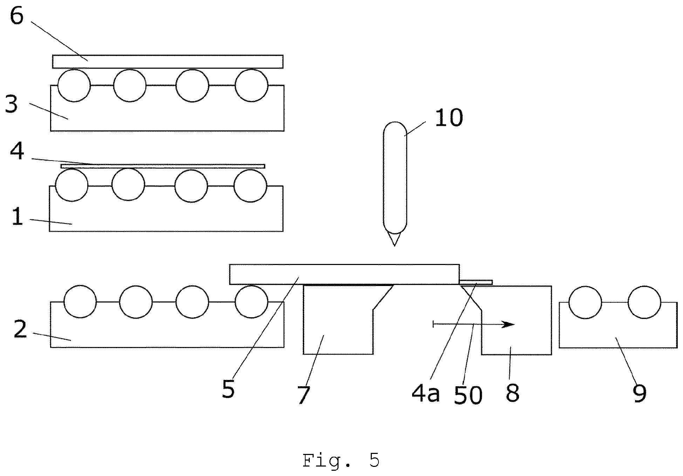

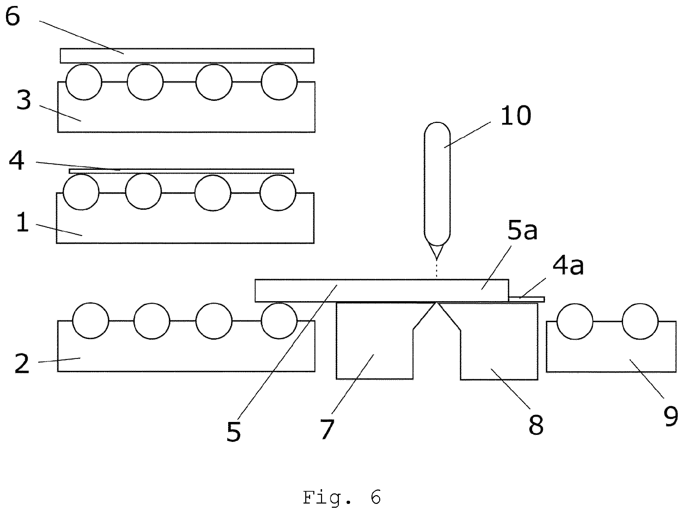

In Figur 5 ist dargestellt, wie das an den ersten Streifen ersten Flachmaterials 4a gefügte zweite Flachmaterial 5, von der eingangsseitigen Spanneinrichtung 7 gelöst, mittels der ausgansseitigen Spanneinrichtung in Richtung des Ausgabetisches 9 gezogen und verschoben wird. So wird das zu diesem Zeitpunkt aus dem ersten Streifen ersten Flachmaterials 4a und dem zweiten Flachmaterial 5 gebildete Verbundwerkstück 20 um eine Transportstrecke 50 mittels eines Vorschubs der ausgangsseitigen Spannvorrichtung so weit versetzt, dass ein weiterer und in Figur 6 dargestellte Trennschnitt mittels des Laserkopfes 10 ermöglicht werden kann.

In Figur 6 ist dargestellt, dass das Verbundwerkstück 20 in Folge des Vorschubs der ausgangsseitigen Spannvorrichtung 8 zunächst von der eingangsseitigen Spanneinrichtung 7 erneut gespannt wird, die ausgangsseitige Spanneinrichtung 8 gelöst wurde und diese erneut zu der eingangsseitigen Spanneinrichtung 7 zurück verfahren wurde. Hier spannt die ausgangsseitige Spanneinrichtung 8 erneut das Verbundwerkstück 20 und es kann ein präziser Trennschnitt des Laserkopfes an dem zweiten Flachmaterial 5 ermöglicht werden. Dieser erzeugt einen zweiten Streifen zweiten Flachmaterials 5a, der nun fest mit dem ersten Streifen ersten Flachmaterials 4a verschweißt ist und gemeinsam das an der ausgangsseitigen Spannvorrichtung gespannte Verbundwerkstücks 20 bildet.

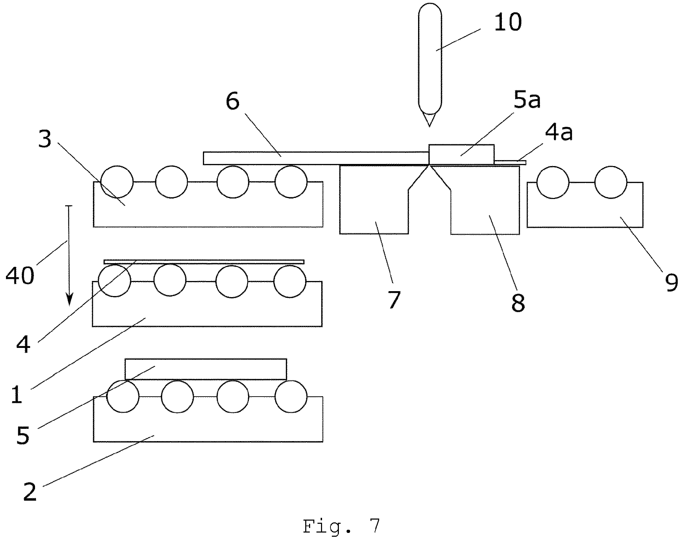

In Figur 7 ist dargestellt, wie ein weiteres Mal die Bereitstellungsvorrichtungen 1, 2, 3 um einen Versatz 40 bewegt werden, um nun ein drittes Flachmaterial 6 zur Verfügung zu stellen. Dies wird analog zum bisherigen Ablauf mittels des Laserkopfes an der Kante des zweiten Streifens zweiten Flachmaterials 5a gefügt und hieran verschweißt.

Durch Wiederholen der Verfahrensschritte kann ein Verbundwerkstück 20 kostengünstig und schnell hergestellt werden, dass maßgeschneidert und individuell zur Reduktion von Emissionen bei seiner Herstellung oder bei seiner Verwendung beitragen kann. Das Verbundwerkstück kann bei einer Kombination von sich in ihren physikalischen, geometrischen oder in ihren Oberflächenbeschichtungen unterscheidenden Flachmaterialien optimal auf gewünschte Bedürfnisse angepasst werden und mittels eines Umformungsprozesses beispielsweise Träger oder Bauteile bilden, die maßgeschneiderte Eigenschaften in Gewicht oder Stabilität aufweisen.

Figur 8 zeigt ein exemplarisches Verbundwerkstück als Kombination von Streifen von Flachmaterialien. Die Flachmaterialien 4, 5, 6 wurden mittels der beschriebenen Vorrichtung und gemäß des beschriebenen Verfahrens zu jeweiligen Streifen 4a, 4b, 5a, 5b, 6a verarbeitet, die wiederum mittels Schweißnähte 61 aneinander gefügt wurden. Das Verbundwerkstück 20 wird sodann an den Umformkanten 60 umgeformt. Vorteilhaft kann hierbei beispielsweise ein maßgeschneiderter Träger hergestellt werden, der auf Grund seines Flachmaterialmix flexibel auf gewünschte Bedürfnisse angepasst werden kann. Dies kann sich vorteilhaft zur Reduzierung umweltschädliche Emissionen auswirken, da weniger Schrott und Abfall bei der Herstellung produziert wird, die Herstellung energiesparend und schnell durchgeführt werden kann, und das umgeformte Verbundwerkstück 20 zur Gewichtseinsparung beispielsweise im Fahrzeugbau einsetzen lässt.

### Bezugszeichenliste:

- 1: erste Bereitstellungsvorrichtung
- 2: zweite Bereitstellungsvorrichtung
- 3: dritte Bereitstellungsvorrichtung
- 4: erstes Flachmaterial
- 4a: erster Streifen ersten Flachmaterials
- 4b: fünfter Streifen ersten Flachmaterials
- 4c: zurückgezogen gespeichertes und gekürztes Reststück ersten Flachmaterials
- 5: zweites Flachmaterial
- 5a: zweiter Streifen zweiten Flachmaterials
- 5b: vierter Streifen zweiten Flachmaterials
- 6: drittes Flachmaterial
- 6a: dritter Streifen dritten Flachmaterials
- 7: eingangsseitige Spannvorrichtung
- 8: ausgangsseitige Spannvorrichtung
- 9: Ausgabetisch
- 10: Laserkopf
- 20: Verbundwerkstück
- 40: Versatz der Bereitstellungseinrichtungen
- 50: Transportschrittstrecke/Vorschub der ausgangsseitigen Spannvorrichtung
- 60: Umformkanten
- 61: Schweißnähte

## Patentansprüche

1. Verfahren zum Fügen und Umformen von Flachmaterialien (4, 5, 6),
wobei wenigstens ein erstes Flachmaterial (4) und wenigstens ein zweites Flachmaterial (5) in je einer und dem jeweiligen Flachmaterial (4, 5, 6) zugeordneten Bereitstellungsvorrichtung (1, 2) einer Schneid-Schweißvorrichtung zugeführt werden, umfassend die Verfahrensschritte
a) Bereitstellen des ersten Flachmaterials (4) aus einer ersten Bereitstellungsvorrichtung (1);
b) Auflegen und Spannen des ersten Flachmaterials (4) an einer eingangsseitigen Spannvorrichtung (7);
das Verfahren **gekennzeichnet durch** folgende Schritte:
c) Ausrichten des ersten Flachmaterials (4) an einer Fügekante eines Ausgangswerkstück, wobei das Ausgangswerkstück an einer ausgangsseitigen Spannvorrichtung (8) gespannt ist;
d) Verbinden des ersten Flachmaterials (4) mit dem Ausgangswerkstück an der Fügekante mittels eines Schweißvorgangs zu einem Verbundwerkstück (20);
e) Transport des Verbundwerkstücks (20) in Richtung eines Ausgabetisches (9) um eine erste Transportschrittstrecke (50);
f) Abtrennen eines Reststücks (4c) des ersten Flachmaterials (4) von dem Verbundwerkstück (20) an einer Trennkante;
g) Entfernen, insbesondere Zurückziehen, des Reststücks (4c) des ersten Flachmaterials von der eingangsseitigen Spannvorrichtung (7);
h) Bereitstellen eines zweiten Flachmaterials (5) aus einer zweiten Bereitstellungsvorrichtung (2);
i) Auflegen und Spannen der zweiten Flachmaterials (5) an einer eingangsseitigen Spannvorrichtung (7);
j) Ausrichten des zweiten Flachmaterials (5) an der Trennkante an dem Verbundwerkstück (20), wobei das Verbundwerkstück (20) an einer ausgangsseitigen Spannvorrichtung (8) gespannt ist;
k) Verbinden des zweiten Flachmaterials (5) mit dem Verbundwerkstück (20) an der Trennkante mittels eines Schweißvorgangs;
m) Wiederholtes Zuführen des ersten Flachmaterials (4) oder des zweiten Flachmaterials (5) oder weiterer Flachmaterialien (6) aus jeweiligen Bereitstellungsvorrichtungen (1, 2).

2. Verfahren nach Anspruch 1 umfassend einen dem Verfahrensschritt a) vorausgehenden Verfahrensschritt
a1) Durchführen eines Initialschnitts zur Kantenvorbereitung, wobei das erste Eingangsmaterial (4) besäumt und ein erster Streifen des Eingangsmaterials als Abfall abgetrennt wird.

3. Verfahren nach einem der vorausgehenden Ansprüche umfassend einen an den Verfahrensschritt b) oder i) anschließenden Verfahrensschritt
bi) Vorbereiten, insbesondere Besäumen einer Kante, wobei das Vorbereiten bevorzugt im gespannten Zustand erfolgt.

4. Verfahren nach einem der vorausgehenden Ansprüche **dadurch gekennzeichnet, dass** Verfahrensschritt e) mittels der folgenden Verfahrensschritte erfolgt:
e1) Lösen der eingangsseitigen Spannvorrichtung (7);
e2) Versetzen des an der ausgangsseitigen Spannvorrichtung (8) gespannten Verbundwerkstücks (20) mittels der ausgangsseitigen Spannvorrichtung (8) um die erste Transportschrittstrecke (50);
e3) Spannen der eingangsseitigen Spannvorrichtung (7);
e4) Lösen der ausgangsseitigen Spannvorrichtung (8);
e5) Rückversetzen der ausgangsseitigen Spannvorrichtung (8);
e6) Spannen des Verbundwerkstücks (20) mittels der ausgangsseitigen Spannvorrichtung (8).

5. Verfahren nach einem der vorausgehenden Ansprüche, **dadurch gekennzeichnet, dass** das Verbundstücks (20) mittels der ausgangsseitigen Spannvorrichtung (8) insbesondere am Ort der zuletzt ausgeführten Naht bzw. Fügekante gespannt wird.

6. Verfahren nach einem der vorausgehenden Ansprüche umfassend einen an den Verfahrensschritt k) anschließenden Verfahrensschritt
l) Wiederholen der vorausgegangenen Verfahrensschritte mit einer Anzahl X verschiedener Flachmaterialien.

7. Verfahren nach einem der vorausgehenden Ansprüche umfassend einen an den Verfahrensschritt g) anschließenden Verfahrensschritt:
g1) Lagerung des ersten Flachmaterials (4) in einer ersten Bereitstellungsvorrichtung (1).

8. Verfahren nach einem der vorausgehenden Ansprüche, **dadurch gekennzeichnet, dass** das Abtrennen des Verfahrensschritt f) geradlinig oder einem Konturverlauf folgend erfolgt, wobei insbesondere das Abtrennen des Verfahrensschritts f) in einem Winkel zur Flächennormalen des Flachmaterials (4, 5, 6) erfolgt.

9. Verfahren nach einem der vorausgehenden Ansprüche, **dadurch gekennzeichnet, dass** ein abschließender Verfahrensschritt einen Umformprozess der gefügten Flachmaterialien umfasst, wobei der Umformprozess vorzugsweise ein Abkanten mit einem Abkantwinkel, insbesondere zwischen 45° und 135°, bevorzugt in etwa 90° umfasst, wobei mittels des Verfahrens insbesondere ein in seine Längsrichtung geöffneter Profilkörper gebildet wird.

10. Vorrichtung zur Durchführung eines Verfahrens zum Fügen und Umformen von Flachmaterialien nach einem der vorangegangenen Ansprüche, umfassend wenigstens zweier Bereitstellungsvorrichtungen (1, 2),
wenigstens einer eingangsseitigen und wenigstens einer ausgangsseitigen Spanneinrichtung (7, 8),
wenigstens einer Schneid-Schweißeinrichtung sowie
wenigstens eines Ausgabetisches (9),
**dadurch gekennzeichnet, dass**
die Bereitstellungsvorrichtungen (1, 2) relativ zum Ausgabetisch (9) oder relativ zu der zweiten Spanneinrichtung (2) bewegbar ausgebildet sind,
wobei die Bereitstellungsvorrichtungen (1, 2) flächig, schubladenförmig und mit einem an das jeweilige Flachmaterial (4, 5 6) angepassten Vorschub zum Verschieben oder Zurückziehen der Flachmaterialen ausgebildet sind.

11. Vorrichtung nach Anspruch 10, **dadurch gekennzeichnet, dass** der Vorschub frei programmierbare Achsen aufweist.
und/oder
dass die Bereitstellungsvorrichtungen (1, 2) vertikal zueinander angeordnet sind..

12. Vorrichtung nach einem der vorangehenden Ansprüche 10 oder 11 **dadurch gekennzeichnet, dass** jede Bereitstellungsvorrichtung (1, 2) eine ihr jeweils zugeordnete erste Spanneinrichtung (7) umfasst und die zweite Spanneinrichtung (8) dem Ausgabetisch (9) zugeordnet ist.

13. Vorrichtung nach einem der vorangehenden Ansprüche 10 bis 12 **dadurch gekennzeichnet, dass** die Spanneinrichtungen (1, 2) Magnetspanntechnik, oder Vakuumspanntechnik, oder Spannbrückentechnik umfassen, wobei insbesondere die Spanneinrichtungen für ein einseitiges oder für ein beidseitiges Spannen der Flachmaterialien (4, 5, 6) ausgebildet sind.

14. Vorrichtung nach einem der vorangehenden Ansprüche 10 bis 13 **dadurch gekennzeichnet, dass** eine jede Bereitstellungsvorrichtung (1, 2) Klemmvorrichtungen, insbesondere Manipulatoren zum Ausrichten oder Arretieren der Flachmaterialien (4, 5, 6) aufweist, wobei die Klemmvorrichtungen insbesondere frei programmierbare Bewegungsachsen aufweisen.

15. Vorrichtung nach einem der vorangehenden Ansprüche 10 bis 14 **dadurch gekennzeichnet, dass** die Schneid-Schweißeinrichtung wenigstens einen Laserkopf umfasst, wobei der wenigstens eine Laserkopf (10) zum Schweißen der Flachmaterialien (4, 5, 6), und/oder zum Schneiden der Flachmaterialien (4, 5, 6), und/oder zur Schweißnahtvorbereitung, insbesondere zur Ausführung eines Ablationsschritts an der Kante der Flachmaterialien (4, 5, 6) ausgebildet ist.

16. Vorrichtung nach einem der vorangehenden Ansprüche 10 bis 15 **dadurch gekennzeichnet, dass** die Schneid-Schweißeinrichtung als Laserportal, insbesondere als 2D-Laserportal ausgebildet ist,
und/oder dass der Laserkopf (10) als Remote-Laserkopf oder als Nahfeld-Laserkopf ausgebildet ist.

17. Vorrichtung nach einem der vorangehenden Ansprüche 10 bis 16 **dadurch gekennzeichnet, dass** die Vorrichtung einen Förderer zur Entfernung von Abfall aus der Vorrichtung umfasst, wobei der Förderer insbesondere einen Auffangtrichter umfasst und bevorzugt eine Absaugung umfasst.

18. Vorrichtung nach einem der vorangehenden Ansprüche 10 bis 17 **dadurch gekennzeichnet, dass** die Vorrichtung eine Übergabevorrichtung zwischen dem Ausgabetisch und einer Umformungsvorrichtung umfasst.

19. Vorrichtung nach einem der vorangehenden Ansprüche 10 bis 18 **dadurch gekennzeichnet, dass** die Flachmaterialien (4, 5, 6) aus einem Vormaterialspeicher, insbesondere mittels Flachmaterial-Coils oder mittels Flachmaterial-Tafeln bereitgestellt sind.

## Claims

1. Method for joining and shaping flat materials (4, 5, 6),
wherein at least one first flat material (4) and at least one second flat material (5) are fed to a cutting and welding device in respective supply devices (1, 2), each associated with one flat material (4, 5, 6), comprising the method steps of:
a) supplying the first flat material (4) from a first supply device (1);
b) placing and holding the first flat material (4) on an input-side holding device (7);
the method **characterized by** the following steps:
c) aligning the first flat material (4) at a joining edge of a starting workpiece, wherein the starting workpiece is held on an output-side holding device (8);
d) connecting the first flat material (4) to the starting workpiece at the joining edge by means of a welding operation to give a composite workpiece (20);
e) transporting the composite workpiece (20) in the direction of a delivery table (9) by a first transport step distance (50);
f) separating a residual piece (4c) of the first flat material (4) from the composite workpiece (20) at a separating edge;
g) removing, in particular withdrawing, the residual piece (4c) of the first flat material from the input-side holding device (7);
h) supplying a second flat material (5) from a second supply device (2);
i) placing and holding the second flat material (5) on an input-side holding device (7);
j) aligning the second flat material (5) at the separating edge on the composite workpiece (20), wherein the composite workpiece (20) is held on an output-side holding device (8);
k) connecting the second flat material (5) to the composite workpiece (20) at the separating edge by means of a welding operation;
m) repeatedly feeding the first flat material (4) or the second flat material (5) or additional flat materials (6) from respective supply devices **(1,** 2).

2. Method according to Claim 1, comprising a method step that precedes method step a):
a1) carrying out an initial cut for edge preparation, wherein the first input material (4) is trimmed, and a first strip of the input material is cut off as waste.

3. Method according to either of the preceding claims, comprising a method step that follows method step b) or i) :
bi) preparing, in particular trimming, an edge, wherein preparation preferably takes place in the held state.

4. Method according to one of the preceding claims, **characterized in that** method step e) is carried out by means of the following method steps:
e1) releasing the input-side holding device (7);
e2) moving the composite workpiece (20), which is held on the output-side holding device (8), by the first transport step distance (50) by means of the output-side holding device (8);
e3) applying the input-side holding device (7);
e4) releasing the output-side holding device (8);
e5) resetting the output-side holding device (8);
e6) holding the composite workpiece (20) by means of the output-side holding device (8).

5. Method according to one of the preceding claims, **characterized in that** the composite workpiece (20) is held by means of the output-side holding device (8), in particular at the location of the last seam or joining edge formed.

6. Method according to one of the preceding claims, comprising a method step that follows method step k):
l) repeating the preceding method steps with a number X of different flat materials.

7. Method according to one of the preceding claims, comprising a method step that follows method step g):
g1) storing the first flat material (4) in a first supply device (1).

8. Method according to one of the preceding claims, **characterized in that** the process of separation in method step f) takes place in a straight line or following a contour, wherein, in particular, the process of separation in method step f) takes place at an angle to the surface normal of the flat material (4, 5, 6).

9. Method according to one of the preceding claims, **characterized in that** a concluding method step comprises a shaping process on the joined flat materials, wherein the shaping process preferably comprises edging with an edging angle, in particular between 45° and 135°, preferably about 90°, wherein, in particular, a profile body that is open in its longitudinal direction is formed by means of the method.

10. Device for carrying out a method for joining and shaping flat materials according to one of the preceding claims, comprising
at least two supply devices (1, 2),
at least one input-side and at least one output-side holding device (7, 8),
at least one cutting and welding device, and
at least one delivery table (9),
**characterized in that**
the supply devices (1, 2) are designed to be movable relative to the delivery table (9) or relative to the second holding device (2),
wherein the supply devices (1, 2) are designed to be planar, in particular in the form of trays, and with a feed motion, matched to the respective flat material (4, 5, 6), for displacing or retracting the flat materials.

11. Device according to Claim 10, **characterized in that** the feed motion has freely programmable axes,
and/or
**in that** the supply devices (1, 2) are arranged vertically with respect to one another.

12. Device according to one of preceding Claims 10 or 11, **characterized in that** each supply device (1, 2) comprises a respectively associated first holding device (7), and the second holding device (8) is associated with the delivery table (9).

13. Device according to one of preceding Claims 10 to 12, **characterized in that** the holding devices (1, 2) comprise magnetic holding technology, or vacuum holding technology, or gripping yoke technology, wherein, in particular, the holding devices are designed for holding the flat materials (4, 5, 6) on one side or on both sides.

14. Device according to one of preceding Claims 10 to 13, **characterized in that** each supply device (1, 2) has clamping devices, in particular manipulators, for aligning or retaining the flat materials (4, 5, 6), wherein the clamping devices have, in particular, freely programmable motion axes.

15. Device according to one of preceding Claims 10 to 14, **characterized in that** the cutting and welding device comprises at least one laser head, wherein the at least one laser head (10) is designed for welding the flat materials (4, 5, 6), and/or for cutting the flat materials (4, 5, 6), and/or for weld seam preparation, in particular for carrying out an ablation step at the edge of the flat materials (4, 5, 6).

16. Device according to one of preceding Claims 10 to 15, **characterized in that** the cutting and welding device is designed as a laser portal, in particular as a 2D laser portal,
and/or **in that** the laser head (10) is designed as a remote laser head or as a near-field laser head.

17. Device according to one of preceding Claims 10 to 16, **characterized in that** the device comprises a conveyor for removing waste from the device, wherein the conveyor comprises, in particular, a collecting hopper, and preferably comprises a suction extraction system.

18. Device according to one of preceding Claims 10 to 17, **characterized in that** the device comprises a transfer device between the delivery table and a shaping device.

19. Device according to one of preceding Claims 10 to 18, **characterized in that** the flat materials (4, 5, 6) are supplied from a feedstock store, in particular by means of flat material coils or by means of flat material plates.

## Revendications

1. Procédé d'assemblage et de mise en forme de matériaux plats (4, 5, 6),
au moins un premier matériau plat (4) et au moins un deuxième matériau plat (5) étant amenés à un dispositif de découpage-soudage dans respectivement un dispositif de fourniture (1, 2) associé au matériau plat (4, 5, 6) respectif, comprenant les étapes de procédé
a) fourniture du premier matériau plat (4) provenant d'un premier dispositif de fourniture (1) ;
b) placement et serrage du premier matériau plat (4) sur un dispositif de serrage côté entrée (7) ;
**caractérisé par** des étapes suivantes :
c) orientation du premier matériau plat (4) sur un bord d'assemblage d'une pièce de départ, la pièce de départ étant serrée sur un dispositif de serrage côté sortie (8) ;
d) liaison du premier matériau plat (4) à la pièce de départ sur le bord d'assemblage au moyen d'une opération de soudage en une pièce composite (20) ;
e) transport de la pièce composite (20) en direction d'une table de distribution (9) autour d'un premier trajet de transport(50) ;
f) séparation d'une pièce restante (4c) du premier matériau plat (4) de la pièce composite (20) sur un bord de séparation ;
g) enlèvement, en particulier retrait, de la pièce restante (4c) du premier matériau plat du dispositif de serrage côté entrée (7) ;
h) fourniture d'un deuxième matériau plat (5) provenant d'un deuxième dispositif de fourniture (2) ;
i) placement et serrage du deuxième matériau plat (5) sur un dispositif de serrage côté entrée (7) ;
j) orientation du deuxième matériau plat (5) sur le bord de séparation sur la pièce composite (20), la pièce composite (20) étant serré sur un dispositif de serrage côté sortie (8) ;
k) liaison du deuxième matériau plat (5) à la pièce composite (20) sur le bord de séparation au moyen d'une opération de soudage ;
m) amenée répétée du premier matériau plat (4) ou du deuxième matériau plat (5) ou d'autres matériaux plats (6) provenant de dispositifs de fourniture (1, 2) respectifs.

2. Procédé selon la revendication 1 comprenant une étape de procédé précédant l'étape de procédé a)
a1) mise en œuvre d'une découpe initiale pour la préparation de bord, le premier matériau de départ (4) étant rogné et une première bande du matériau de départ étant séparée en tant que déchet.

3. Procédé selon l'une des revendications précédentes, comprenant une étape de procédé située dans le prolongement de l'étape de procédé b) ou i)
bi) préparation, en particulier rognage d'un bord, la préparation étant effectuée de manière préférée dans l'état serré.

4. Procédé selon l'une des revendications précédentes, **caractérisé en ce que** l'étape de procédé e) a lieu au moyen des étapes de procédé suivantes :
e1) desserrage du dispositif de serrage côté entrée (7) ;
e2) déplacement de la pièce composite (20) serrée sur le dispositif de serrage côté sortie (8) au moyen du dispositif de serrage côté sortie (8) autour du premier trajet de transport (50) ;
e3) serrage du dispositif de serrage côté entrée (7) ;
e4) desserrage du dispositif de serrage côté sortie (8) ;
e5) mise en retrait du dispositif de serrage côté sortie (8) ;
e6) serrage de la pièce composite (20) au moyen du dispositif de serrage côté sortie (8).

5. Procédé selon l'une des revendications précédentes, **caractérisé en ce que** la pièce composite (20) est serrée en particulier sur l'emplacement de la soudure ou du bord d'assemblage exécuté(e) en dernier lieu au moyen du dispositif de serrage côté sortie (8).

6. Procédé selon l'une des revendications précédentes, comprenant une étape de procédé située dans le prolongement de l'étape de procédé k)
l) répétition des étapes de procédé précédentes avec un nombre de X matériaux plats différents.

7. Procédé selon l'une des revendications précédentes, comprenant une étape de procédé située dans le prolongement de l'étape de procédé g)
g1) entreposage du premier matériau plat (4) dans un premier dispositif de fourniture (1).

8. Procédé selon l'une des revendications précédentes, **caractérisé en ce que** la séparation de l'étape de procédé f) a lieu de manière rectiligne ou selon un tracé de contour, la séparation de l'étape de procédé f) ayant lieu en particulier selon un angle par rapport à la normale de surface du matériau plat (4, 5, 6).

9. Procédé selon l'une des revendications précédentes, **caractérisé en ce qu'**une étape de procédé terminale comprend un processus de mise en forme des matériaux plats assemblés, le processus de mise en forme comprenant de préférence un biseautage avec un angle de biseautage, compris en particulier entre 45° et 135°, de manière préférée selon environ 90°, un corps profilé ouvert dans son sens longitudinal étant formé en particulier au moyen du procédé.

10. Dispositif de mise en œuvre du procédé d'assemblage et de mise en forme de matériaux plats selon l'une des revendications précédentes, comprenant
au moins deux dispositifs de fourniture (1, 2),
au moins un système de serrage côté entrée et au moins un système de serrage côté sortie (7, 8),
au moins un système de découpage-soudage ainsi
qu'au moins une table de distribution (9),
**caractérisé en ce que**
les dispositifs de fourniture (1, 2) sont réalisés de manière à pouvoir être déplacés par rapport à la table de distribution (9) ou par rapport au deuxième système de serrage (2),
les dispositifs de fourniture (1, 2) étant réalisés à plat, en forme de tiroir et avec un avancement adapté au matériau plat (4, 5, 6) respectif pour coulisser ou retirer les matériaux plats.

11. Dispositif selon la revendication 10, **caractérisé en ce que** l'avancement présente des axes librement programmables,
et/ou
**que** les dispositifs de fourniture (1, 2) sont disposés verticalement l'un par rapport à l'autre.

12. Dispositif selon l'une des revendications précédentes 10 ou 11, **caractérisé en ce que** chaque dispositif de fourniture (1, 2) comprend un premier système de serrage (7) qui lui est respectivement associé et le deuxième système de serrage (8) est associé à la table de distribution (9).

13. Dispositif selon l'une des revendications précédentes 10 à 12, **caractérisé en ce que** les systèmes de serrage (1, 2) comprennent une technique de serrage magnétique, ou une technique de serrage sous vide ou une technique de pontage de serrage, en particulier les systèmes de serrage étant réalisés pour un serrage unilatéral ou pour un serrage bilatéral des matériaux plats (4, 5, 6).

14. Dispositif selon l'une des revendications précédentes 10 à 13, **caractérisé en ce que** chaque dispositif de fourniture (1, 2) comporte des dispositifs de blocage, en particulier des manipulateurs destinés à orienter ou arrêter les matériaux plats (4, 5, 6), les dispositifs de blocage comportant en particulier des axes de déplacement librement programmables.

15. Dispositif selon l'une des revendications précédentes 10 à 14, **caractérisé en ce que** le système de découpage-soudage comprend au moins une tête laser, l'au moins une tête laser (10) étant réalisée pour souder les matériaux plats (4, 5, 6) et/ou pour découper les matériaux plats (4, 5, 6) et/ou pour préparer le cordon de soudage, en particulier pour exécuter une étape d'ablation sur le bord des matériaux plats (4, 5, 6).

16. Dispositif selon l'une des revendications précédentes 10 à 15, **caractérisé en ce que** le système de découpage-soudage est réalisé en tant qu'un portique laser, en particulier en tant qu'un portique laser 2D, et/ou que la tête laser (10) est réalisée en tant qu'une tête laser à distance ou une tête laser à champ proche.

17. Dispositif selon l'une des revendications précédentes 10 à 16, **caractérisé en ce que** le dispositif comprend un convoyeur destiné à retirer des déchets hors du dispositif, le convoyeur comprenant en particulier une trémie de captage et comprenant de manière préférée une évacuation par aspiration.

18. Dispositif selon l'une des revendications précédentes 10 à 17, **caractérisé en ce que** le dispositif comprend un dispositif de transport entre la table de distribution et un dispositif de mise en forme.

19. Dispositif selon l'une des revendications précédentes 10 à 18, **caractérisé en ce que** les matériaux plats (4, 5, 6) sont fournis depuis un système de stockage de matières premières, en particulier au moyen de bobines de matériau plat ou au moyen de panneaux de matériau plat.
